# EUROPEAN PATENT SPECIFICATION

(11) **EP 2 804 297 B1**
(45) Date of publication and mention of the grant of the patent: **12.12.2018**
(21) Application number: 14168655.0
(22) Date of filing: 16.05.2014
(51) Int. Cl.: H02K 15/00, H02K 17/16, H02K 17/18, H02K 17/20

(54) **Squirrel-cage rotor assembly with electron beam welded end caps**
Rotorabschlusskappe für Käfigläuferanordnung mit Elektronstrahlen geschweisste Fuge
Dispositif rotor à cage d écureuil avec joint de couvercle d'extrémité soudé par faisceaux d'électrons

(30) Priority: 18.05.2013 US 201313897370
(43) Date of publication of application: 19.11.2014
(73) Proprietor: Tesla, Inc., Palo Alto, CA 94304 (US)
(72) Inventor: Nelson, David Fred, Menlo Park, CA 94025 (US); Luan, Shyi-Perng Phillip, Walnut Creek, CA 94598 (US); Pearce, Edwin Marcum, San Francisco, CA 95107 (US); Fong, William Randall, Hayward, CA 94545 (US)
(74) Representative: Liesegang, Eva

(56) References cited:
- US-A1- 2011 241 473
- US-A1- 2012 217 837
- US-A1- 2012 228 272
- US-A1- 2012 293 036

## Description

### FIELD OF THE INVENTION

The present invention relates generally to electric motors and, more specifically, to an electric motor rotor assembly. More particularly, the present invention relates to a method of fabricating a rotor assembly for an electric motor according to the preamble of claim 1. A method of this type is known from US 2012/0228272 A1. Another similar rotor assembly is described in US 2011/0241473 A1.

### BACKGROUND OF THE INVENTION

AC induction motors are widely used in a variety of industrial and residential applications. In general, this type of motor includes a laminated magnetic core mounted to a drive shaft. The laminated magnetic core may be fabricated from a plurality of laminated magnetic discs, or from a plurality of arc-like core segments. The laminated magnetic core includes a plurality of longitudinal slots into which bars of electrically conductive metal are fit. The ends of the bars extend beyond either end of the laminated magnetic core. An endring or end cap at either end of the laminated magnetic core is used to mechanically and electrically join the ends of the rotor bars.

It will be appreciated that there are numerous techniques that may be used to fabricate the rotor assembly in general and the cap assembly in particular. Typically these techniques make trade-offs between several, often competing, factors that include (i) maximizing the electrical conductivity between the rotor bars; (ii) rotor weight; (iii) material cost; and (iv) fabrication/assembly cost and complexity. One approach that has been used to fabricate the rotor assembly is disclosed in U.S. Patent No. 3,778,652. As described, a casting process is used to cast aluminum conductor bars in the slots within the laminated magnetic core. To improve the fit between the cast bars and the slots of the core, this patent discloses utilizing projections within the slots, thereby confining and minimizing the shrinkage of the cast bars to small regions. The casting process can be used to cast both the conductor bars and the end rings that electrically couple the bars together.

U.S. Patent No. 4,064,410 discloses an alternate rotor fabrication process. As disclosed, rotor bars are first inserted into a laminated core such that end portions of each bar protrude beyond the end laminations at either end of the core. An end ring is then positioned over the shaft at either end of the core, the end rings having a plurality of channels on the inner ring surface that are designed to accept the ends of the rotor bars. Welding is then used to fuse the end portions of the rotor bars to the end rings, the welding process being carried out while applying an axial compression of the two rings toward one another.

U.S. Patent No. 6,088,906 discloses several techniques for forming a joint between the rotor bars that extend beyond the laminated core and the end rings positioned at either end of the rotor assembly. In one of the disclosed techniques, the end rings are rotated about their rotational axes at high speed, and then simultaneously pushed into contact with the ends of the rotor bars. Frictional heating causes the ends of the rotor bars to fuse into the complementary surfaces of the rings. This frictional heating approach may be augmented by applying a high axial current to the end rings. Also disclosed is a technique in which a pulsed current generator is used to heat a foil of a brazing alloy to form a braze joint between the end rings and the ends of the rotor bars.

Japanese Patent Application No. 2003020929 (Publication No. 2004007949) discloses a rotor fabrication technique in which the end rings are formed of multiple, individual arc-like end ring pieces. The end ring pieces are positioned at the ends of the laminated core, between the rotor bars. A rotary tool is used to friction weld the end surfaces of the rotor bars to the end ring pieces.

Co-assigned U.S. Patent No. 8,365,392 discloses a method of fabricating a rotor assembly in which a solid ring is formed at either end of the stack of laminated discs, the solid rotor rings yielding improved electrical and mechanical characteristics in a low weight assembly. The solid rings are fabricated by brazing slugs between the end portions of the rotor bars, the brazing preferably being performed in a vacuum furnace or an induction brazing system.

While the prior art discloses a number of techniques that may be used to fabricate the rotor assembly of an electric motor, a simplified, reliable and cost effective fabrication technique that achieves high performance is desired. The present invention provides such a rotor assembly and fabrication process. The present invention provides a method of fabricating a rotor assembly for an electric motor according to claim 1 and a rotor assembly for an electric motor according to claim 14. Examples of the invention are given in the dependent claims.

### SUMMARY OF THE INVENTION

The invention provides a method of fabricating a rotor assembly for an electric motor as defined in claim 1 and a rotor assembly for an electric motor as defined in claim 14.

### BRIEF DESCRIPTION OF THE DRAWINGS

Fig. 1 provides a perspective view of the primary components of a rotor assembly, shown in an exploded relation, in accordance with a preferred embodiment of the invention;
Fig. 2 is an illustration of a laminated disc used in the laminated disc assembly;
Fig. 3 is a detailed view of three of the slots of the laminated disc shown in Fig. 2;
Fig. 4 is a cross-sectional view of a rotor bar suitable for use with the laminated disc shown in Fig. 2 and the rotor stack of Fig. 1;
Fig. 5 provides a side view of the rotor core assembly after insertion of the rotor bars into the stack of laminated discs;
Fig. 6 provides a perspective, exploded view of the core assembly and end caps;
Fig. 7 provides a perspective view of one of the end caps, this view showing the slots into which the ends of the rotor bars are inserted;
Fig. 8 provides a side view of the end cap shown in Fig. 7;
Fig. 9 provides a perspective view of the end cap and lamination stack prior to assembly;
Fig. 10 provides a perspective view of the end cap and lamination stack shown in Fig. 9 taken from a different angle;
Fig. 11 illustrates the step of seating the end caps onto the core assembly;
Fig. 12 illustrates the e-beam end cap welding step;
Fig. 13 illustrates the desired weld depth during the e-beam welding step;
Fig. 14 illustrates the rotor assembly prior to installation of the containment rings; and
Fig. 15 illustrates the rotor assembly post-installation of the containment rings.

### DESCRIPTION OF THE SPECIFIC EMBODIMENTS

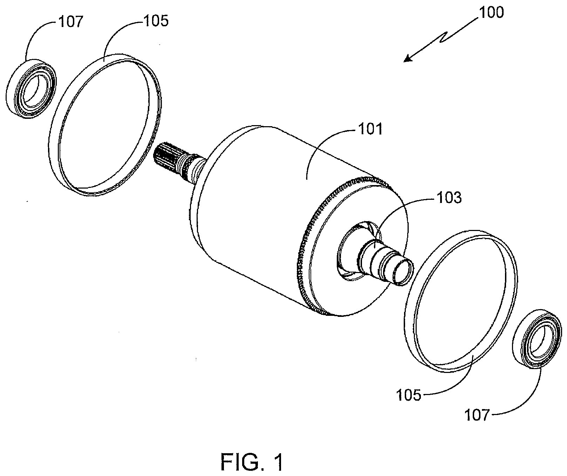

Fig. 1 is a partially exploded, perspective view of the primary components of a rotor assembly 100 in accordance with a preferred embodiment of the invention. It will be appreciated that other configurations may be used with the invention, and the specific designs and dimensions provided relative to the preferred embodiment are only meant to illustrate, not limit, the scope of the invention and should not be considered to be to scale. Additionally, it should be understood that identical element symbols used on multiple figures refer to the same component, or components of equal functionality.

As described in further detail below, the core assembly 101 is comprised of a plurality of laminated discs, typically referred to as the rotor stack, and a plurality of conductor bars, also referred to herein as rotor bars. Core assembly 101 is coaxially mounted to a rotor shaft 103, shown already inserted into assembly 101 in this figure. Shaft 103 may include keys or similar means to locate and position the core assembly about its central axis, although in the preferred embodiment shaft 103 is press-fit into the core assembly 101 which is preferably held at an elevated temperature during the press-fitting operation. At either end of core assembly 101 is a rotor containment ring 105. Additionally, rotor assembly 100 includes ball bearing assemblies 107 as shown in Fig. 1, as well as various washers, seals, and retaining rings that are not shown.

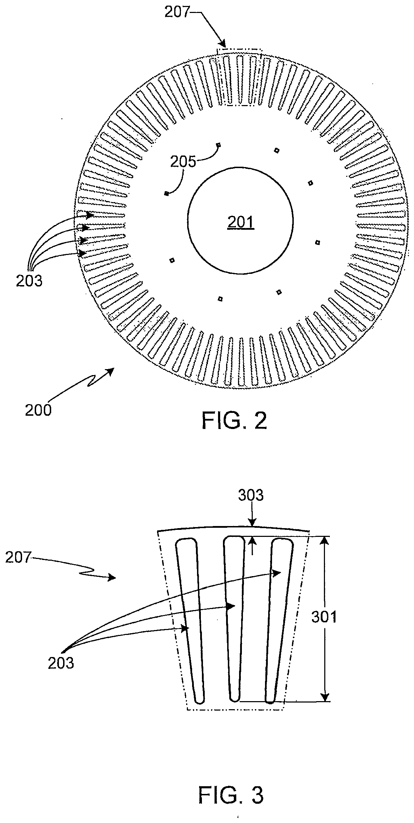

Fig. 2 illustrates a single laminated steel disc 200. It will be appreciated that the invention may utilize laminated discs of a different size, with a different number of slots, and with a differently shaped slot design without departing from the invention. A stack of discs 200 form the stack comprising core assembly 101. In the preferred embodiment, approximately 400 discs 200, each approximately 0.35 millimeters thick, comprise core assembly 101. The center 201 of each disc is removed, for example utilizing a boring or stamping procedure, center 201 sized to fit rotor shaft 103. As shown, each disc 200 includes a plurality of slots 203, slots 203 having substantially the same shape. In the illustrated embodiment, disc 200 includes 74 equally spaced slots 203. To insure that during assembly slots 203 are aligned throughout the entire stack of laminated discs, preferably half shears 205 are included on each disc 200. It will be appreciated that the exact configuration, i.e., the number, location and shape of the half shears, is unimportant as long as a means is provided to insure that the slots in all of the discs are aligned.

A detailed view 207 of three slots 203 is provided in Fig. 3. Slots 203 are generally rectangular in shape. In the preferred embodiment, and as illustrated, each slot 203 has a slot height 301 of approximately 20. The outermost edge of slot 203 is preferably less than 5 millimeters from the outer edge of disc 200 (i.e., spacing 303). Preferably the lowermost edge of slot 203 has a radius of curvature of less than 1 millimeter.

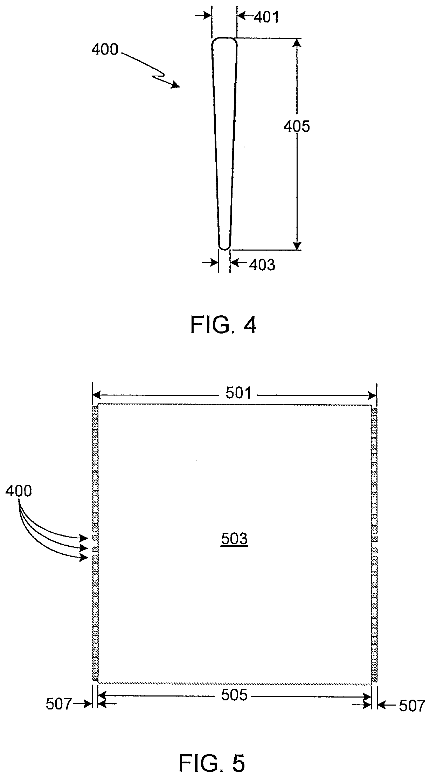

Core assembly 101 is further comprised of a plurality of rotor bars, the number of rotor bars being equivalent to the number of slots 203 (e.g., 74 in the preferred embodiment). Preferably the rotor bars are extruded from oxygen free copper. Fig. 4 provides a cross-sectional view of a rotor bar 400. The rotor bars have substantially the same shape as slots 203, although the dimensions are slightly smaller in order to allow bars 400 to be inserted into slots 203. In the illustrated embodiment, each bar 400 has an upper width 401 of approximately 3 millimeters, a lower width 403 of approximately 1 millimeter, a height 405 slightly less than slot height 301 and a length 501 of less than 175 millimeters. As shown in Fig. 5, preferably the lamination stack 503 has an overall length 505 such that each rotor bar 400 extends out either end of the laminated stack 503 by approximately 3 millimeters (i.e., dimensions 507).

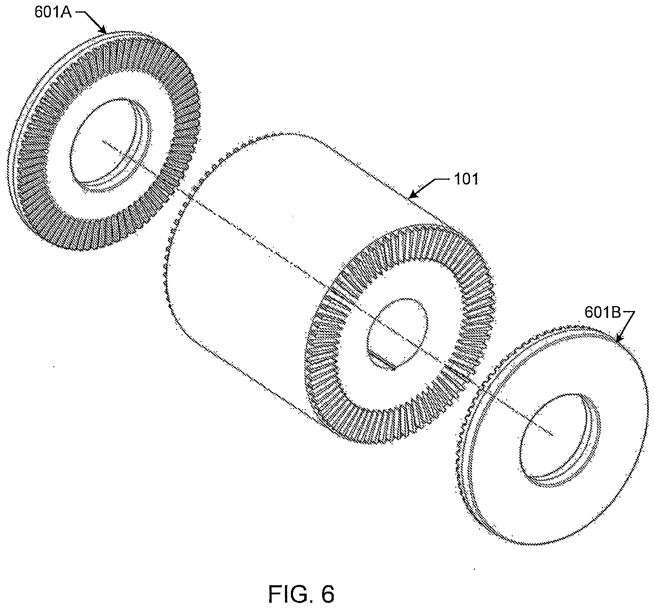

After assembly of the stack of laminated discs 503 and the insertion of rotor bars 400 into slots 203, the end assemblies are fabricated. As shown in the perspective, exploded view of Fig. 6, on either end of the core assembly 101 is an end cap 601 (represented as 601A and 601B in Fig. 6). The end caps are preferably forged, and more preferably forged with a closed die forging press. As the end caps are preferably forged, rather than cast, high purity copper can be used. Additionally, due to the forging process, the porosity associated with casting can be eliminated, thereby achieving higher electrical conductivity which, in turn, leads to improved motor efficiency and power.

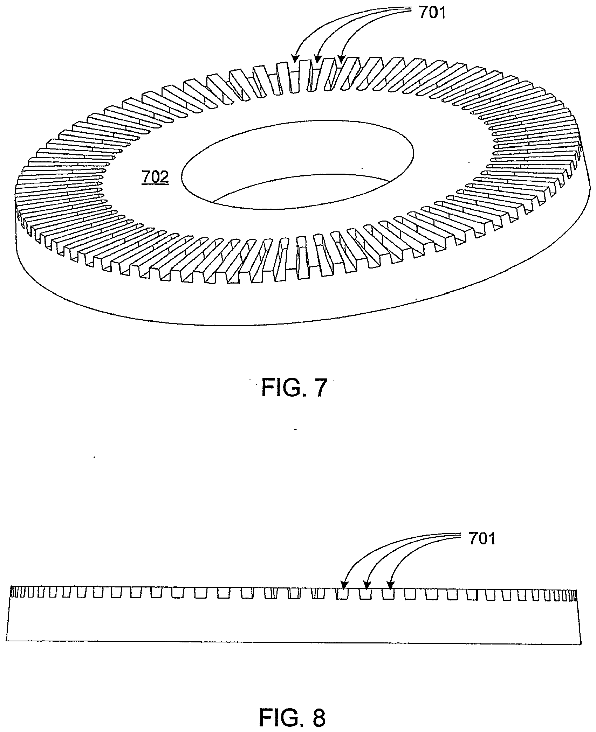

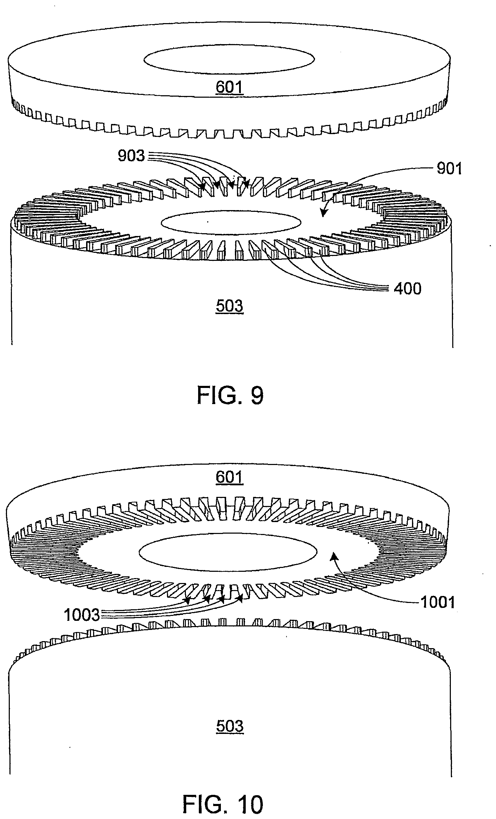

Figs. 7 and 8 provided perspective and side views, respectively, of one of the end caps 601. For each end cap 601, the surface 702 that faces the core assembly 101 includes a plurality of slots 701, the number of slots 701 being equivalent to the number of rotor bars 400 protruding from slots 203 (e.g., 74 in the preferred embodiment). Slots 701, also referred to herein as cavities, extend partially through the end cap and are shaped and sized to accommodate the protruding ends of rotor bars 400. In the preferred embodiment each slot 701 extends approximately 3 millimeters into the end cap, thereby simplifying the forging process. Figs. 9 and 10 provide two different views taken at two different angles of the same region of an exemplary laminate stack and end cap prior to assembly. Once assembled, surface 1001 of end cap 601 seats on surface 901 of lamination stack 503. Similarly, each region 903 of the lamination stack 503 that is located between the protruding ends of rotor bars 400 will seat on complimentary end cap surfaces 1003 after assembly of the end caps to the core assembly.

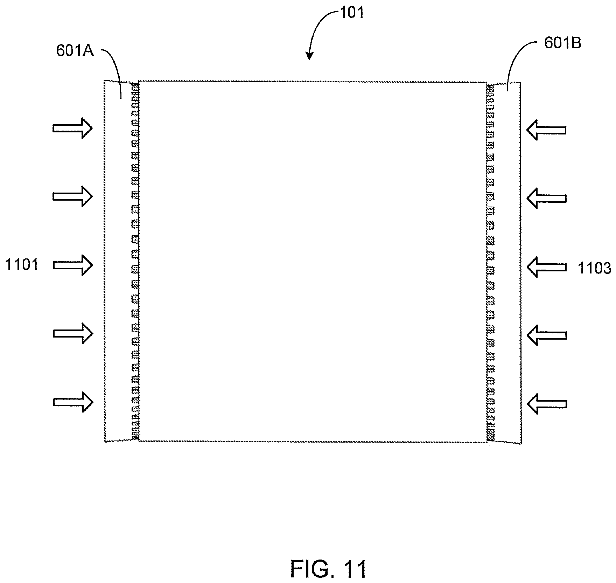

In order to obtain the desired level of rotor performance and that none of the rotor bars experience a spike in energy density, it is important that each end cap 601 is fully seated on the core assembly 101 and that the end of each rotor bar 400 is fully seated within the corresponding end cap slot 701. To achieve this goal, after the end caps 601 are assembled onto the core assembly a force is applied to the end caps, pressing them firmly onto the core assembly. This fabrication step is illustrated in Fig. 11, the figure showing force being applied in directions 1101 and 1103. Note that due to the malleability of copper, the material used for both the rotor bars 400 and the end caps 601 in the preferred embodiment, it is relatively easy to seat the end caps during this compression step and achieve full contact both between the complementary seating surfaces and the rotor bars 400 and the corresponding slots 203.

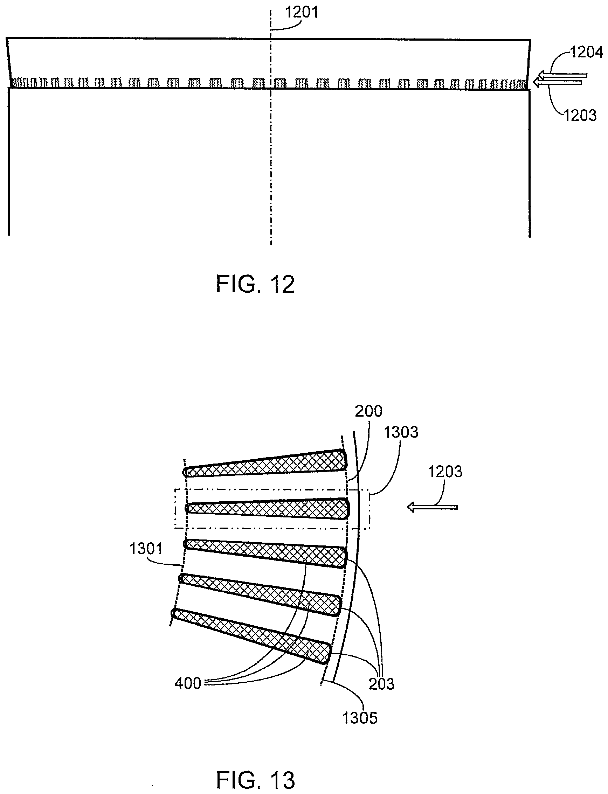

Once the end caps have been seated onto the core assembly, an electron-beam (i.e., e-beam) welder is used to fusion weld each end cap to the rotor bars 400. The e-beam is directed toward the circumferential side surface of each end cap, preferably towards the rotor assembly's central axis 1201 in a direction 1203 as shown in Fig. 12. A single e-beam welder may be used to sequentially fuse the rotor bars to the end caps; alternately, two different e-beam welders may be used, thereby allowing simultaneous end cap welding. In at least one embodiment, the e-beam is directed at the juncture of the outermost end surface of each rotor bar 400 and the innermost seating surface of each end cap slot 701. In at least one alternate embodiment, the e-beam is offset from this juncture in the direction of the end cap (represented by e-beam direction 1204). Although it is easiest to rotate the rotor assembly about axis 1201 during the welding operation, it will be appreciated that it is also possible to rotate the e-beam around the rotor assembly. In order to achieve the desired performance, the weld depth must extend past the entire rotor bar, i.e., dimension 405 shown in Fig. 4. This aspect of the invention is illustrated in Fig. 13 which shows a portion of disc 200, this portion including five slots 203. Within each slot is a rotor bar 400. As noted above, in the preferred embodiment the weld depth extends beyond the inner radius 1301 of rotor bars 400. The typical weld zone, represented in Fig. 13 by zone 1303, extends 1-5 millimeters, and more preferably 2-3 millimeters, beyond the inner edge (i.e., the inner bar radius) of rotor bars 400. It should be understood that weld zone 1303 represents the weld zone for a single bar and as such, must be repeated for each rotor bar. Therefore in the exemplary embodiment, this weld zone would be repeated 74 times.

After each end cap 601 has been e-beam welded to the rotor bars, the shaft 103 is installed in the welded core assembly 101. While those of skill in the art will recognize that there are numerous techniques for installing the shaft, in the preferred embodiment shaft 103 is press-fit into the core assembly 101 as previously described. Once the rotor shaft is installed, the assembly is balanced. Typically balancing is performed by turning the rotor assembly on a lathe and removing a circumferential outer portion of each end cap. During this step a portion of the outer radius of the end portion of the rotor bars is typically removed as well. The outer radius 1305 of the rotor bars, prior to removal of any material, is shown in Fig. 13. During the balancing step, imperfections due to the forging and welding steps can be removed. This step also insures concentricity with the rotor shaft. It should be understood that although machining of the assembly is preferably performed using a lathe, other means may be used (e.g., a mill, grinder, sander, etc.).

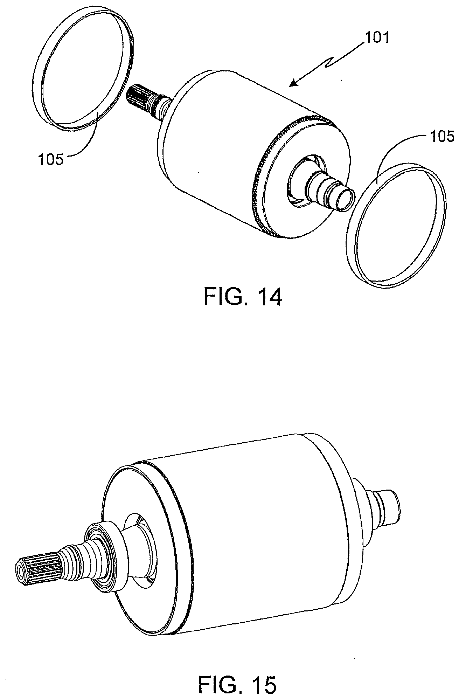

Once the machining step is completed, thereby removing a portion of the end caps, rotor containments rings 105 are positioned over the ends of the assembly. Figs. 14 and 15 show pre- and post-installation, respectively, of the containment rings. Preferably the rotor containment rings are fabricated from stainless steel, although other materials may be used (e.g., beryllium-copper alloys, etc.). Rotor containment rings 105 may be press-fit over the rotor bar/end cap assemblies. Note that the rotor containment rings may also be soldered, bonded, or welded in place. Additionally, temperature differentials (i.e., containment ring heating and/or assembly cooling) may be used to simplify assembly and/or achieve the desired interference fit.

The remaining portions of the rotor assembly 100 can be finished using conventional rotor components with the finished rotor being used to build a conventional electric motor using conventional techniques.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms. Therefore the disclosures and descriptions herein are intended to be illustrative, but not limiting, of the scope of the invention, which is defined in the appended claims.

## Claims

1. A method of fabricating a rotor assembly for an electric motor, the method comprising:
inserting a plurality of rotor bars (400) into a corresponding plurality of slots (203) within a stack of laminated discs, wherein a first portion of each of said plurality of rotor bars (400) protrudes from a first end surface of said stack of laminated discs, and wherein a second portion of each of said plurality of rotor bars (400) protrudes from a second end surface of said stack of laminated discs;
mounting a first end cap (601A) to said plurality of rotor bars (400), wherein said first portion of each of said plurality of rotor bars (400) fits within a corresponding slot (701) of a first plurality of slots in said first end cap (601A);
mounting a second end cap (601B) to said plurality of rotor bars (400), wherein said second portion of each of said plurality of rotor bars (400) fits within a corresponding slot (701) of a second plurality of slots in said second end cap (601B);
directing a first electron beam towards a circumferential side surface of said first end cap (601A) and fusing at least a region of said first portion of each of said plurality of rotor bars (400) to said corresponding slot (701) of said first plurality of slots of said first end cap (601A); and
directing a second electron beam towards a circumferential side surface of said second end cap (601B) and fusing at least a region of said second portion of each of said plurality of rotor bars (400) to said corresponding slot (701) of said second plurality of slots of said second end cap (601B); **characterized in that**
said step of directing said first electron beam further comprises : directing said first electron beam at a first location offset from a first juncture defined by an outermost surface of said first portion of each of said plurality of rotor bars (400) and an axially innermost seating surface of said corresponding slot of said first plurality of slots of said first end cap (601A), in which the rotor bars (400) contact the first end cap (601A), wherein said first location is offset from said first juncture in a direction towards the axially outermost surface of said first end cap (601A); and
said step of directing said second electron beam further comprises: directing said second electron beam at a second location offset from a second juncture defined by an axially outermost surface of said second portion of each of said plurality of rotor bars (400) and an axially innermost seating surface of said corresponding slot of said second plurality of slots of said second end cap (601B), in which the rotor bars (400) contact the second end cap (601B),wherein said second location is offset from said second juncture in a direction towards the axially outermost surface of said second end cap (601B).

2. The method of claim 1, wherein said first electron beam and said second electron beam are emitted by a single e-beam welder, and wherein said steps of directing said first electron beam and directing said second electron beam are performed sequentially.

3. The method of claim 1, wherein said first electron beam is emitted by a first e-beam welder and said second electron beam is emitted by a second e-beam welder, and wherein said steps of directing said first electron beam and directing said second electron beam are performed simultaneously.

4. The method of claim 1, wherein said step of directing said first electron beam further comprises the step of rotating said first electron beam about said first end cap (601A) such that said first electron beam sequentially fuses at least said region of said first portion of each of said plurality of rotor bars (400) to said corresponding slot (701) of said first plurality of slots of said first end cap (601A), and wherein said step of directing said second electron beam further comprises the step of rotating said second electron beam about said second end cap (601B) such that said second electron beam sequentially fuses at least said region of said second portion of each of said plurality of rotor bars (400) to said corresponding slot of said second plurality of slots (701) of said second end cap (601B).

5. The method of claim 1, wherein after performing said step of mounting said first end (601A) cap and while performing said step of directing said first electron beam said method further comprises the step of rotating said first end cap (601A) and said stack of laminated discs relative to said first electron beam such that said first electron beam sequentially fuses at least said region of said first portion of each of said plurality of rotor bars (400) to said corresponding slot (701) of said first plurality of slots of said first end cap (601A), and wherein after performing said step of mounting said second end cap (601B) and while performing said step of directing said second electron beam said method further comprises the step of rotating said second end cap (601B) and said stack of laminated discs relative to said second electron beam such that said second electron beam sequentially fuses at least said region of said second portion of each of said plurality of rotor bars (400) to said corresponding slot (701) of said second plurality of slots of said second end cap.

6. The method of claim 1, wherein said step of fusing at least said region of said first portion of each of said plurality of rotor bars (400) to said corresponding slot (701) of said first plurality of slots of said first end cap (601A) further comprises the step of fusing to a first weld depth, wherein said first weld depth extends beyond an inner radius defined by said plurality of rotor bars (400), and wherein said step of fusing at least said region of said second portion of each of said plurality of rotor bars (400) to said corresponding slot (701) of said second plurality of slots of said second end cap (601B) further comprises the step of fusing to a second weld depth, wherein said second weld depth extends beyond said inner radius defined by said plurality of rotor bars (400).

7. The method of claim 1, further comprising:
machining said first end cap (601A) to remove a first circumferential edge portion of said first end cap and an edge section of said region of said first portion of each of said plurality of rotor bars (400), wherein said step of machining said first end cap is performed after said step of directing said first electron beam; and
machining said second end cap (601B) to remove a second circumferential edge portion of said second end cap and an edge section of said region of said second portion of each of said plurality of rotor bars (400), wherein said step of machining said second end cap is performed after said step of directing said second electron beam.

8. The method of claim 7, further comprising the steps of:
fitting a first containment ring (105) over said first end cap (601A), wherein said first containment ring is positioned on said first end cap at a location corresponding to an outermost end region of said first end cap where said first circumferential edge portion was removed via said step of machining said first end cap; and
fitting a second containment ring (105) over said second end cap (601B), wherein said second containment ring is positioned on said second end cap at a location corresponding to an outermost end region of said second end cap where said second circumferential edge portion was removed via said step of machining said second end cap.

9. The method of claim 1, further comprising the steps of:
fabricating said plurality of rotor bars (400) from a copper material;
fabricating said first end cap (601A) from said copper material; and
fabricating said second end cap (601B) from said copper material.

10. The method of claim 1, further comprising the steps of forging said first end cap (601A) from copper and forging said second end cap (601B) from copper.

11. The method of claim 1, further comprising the steps of pressing said first end cap (601A) onto said first portion of said plurality of rotor bars (400) and towards said stack of laminated discs, and pressing said second end cap (601B) onto said second portion of said plurality of rotor bars (400) and towards said stack of laminated discs.

12. The method of claim 11, wherein said step of pressing said first end cap (601A) onto said first portion of said plurality of rotor bars (400) further comprises the step of seating an inner surface of said first end cap (601A) onto a first outer disc of said stack of laminated discs, and wherein said step of pressing said second end cap (601B) onto said second portion of said plurality of rotor bars (400) further comprises the step of seating an inner surface of said second end cap onto a second outer disc of said stack of laminated discs.

13. The method of claim 1, wherein said first plurality of slots pass through an inner surface of said first end cap (601A) and extend only partially through said first end cap (601A) towards an outer surface of said first end cap (601A), and wherein said second plurality of slots pass through an inner surface of said second end cap (601B) and extend only partially through said second end cap towards an outer surface of said second end cap.

14. A rotor assembly for an electric motor, comprising:
a rotor shaft;
a plurality of laminated discs formed into a stack of laminated discs, wherein each of said plurality of laminated discs includes a plurality of slots, wherein said plurality of slots of each of said plurality of laminated discs are co-aligned within said stack of laminated discs, and wherein said stack of laminated discs is mounted to said rotor shaft;
a plurality of rotor bars (400) passing through said plurality of slots of said stack of laminated discs, wherein a first portion of each of said plurality of rotor bars extends out and away from a first end surface of said stack of laminated discs, and wherein a second portion of each of said plurality of rotor bars extends out and away from a second end surface of said stack of laminated disc;
a first end cap (601A) fused to said plurality of rotor bars, wherein said first end cap (601A) comprises a first plurality of slots, wherein said first portion of each of said plurality of rotor bars fits within a corresponding slot (701) of said first plurality of slots, wherein a first end region corresponding to said first portion of each of said plurality of rotor bars is fusion welded via an electron beam to said corresponding slot of said first plurality of slots of said first end cap (601A), and wherein said first end region extends from an outer rotor bar radius defined by said plurality of rotor bars to an inner rotor bar radius defined by said plurality of rotor bars; and
a second end cap (601B) fused to said plurality of rotor bars, wherein said second end cap comprises a second plurality of slots, wherein said second portion of each of said plurality of rotor bars fits within a corresponding slot of said second plurality of slots, wherein a second end region corresponding to said second portion of each of said plurality of rotor bars is fusion welded via said electron beam to said corresponding slot of said second plurality of slots of said second end cap, and wherein said second end region extends from said outer rotor bar radius defined by said plurality of rotor bars to said inner rotor bar radius defined by said plurality of rotor bars;
**characterized in that**
said electron beam is directed at : a first location offset from a first juncture defined by an axially outermost surface of said first portion of each of said plurality of rotor bars and an axially innermost seating surface of said corresponding slot of said first plurality of slots of said first end cap (601A), in which the rotor bars (400) contact the first end cap (601A), wherein said first location is offset from said first juncture in a direction towards the axially outermost surface of said first end cap (601A); and
said electron beam is further directed at: a second location offset from a second juncture defined by an axially outermost surface of said second portion of each of said plurality of rotor bars and an axially innermost seating surface of said corresponding slot of said second plurality of slots of said second end cap, in which the rotor bars (400) contact the second end cap (601B), wherein said second location is offset from said second juncture in a direction towards the axially outermost surface of said second end cap.

15. The rotor assembly of claim 14, further comprising:
a first containment ring (105) positioned around a section of said first end cap (601A) and said first portion of each of said plurality of rotor bars (400); and
a second containment ring (105) positioned around a section of said second end cap (601B) and said second portion of each of said plurality of rotor bars.

16. The rotor assembly of claim 15, wherein a first circumferential edge portion corresponding to said first end cap (601A) and an edge section of said first portion of each of said plurality of rotor bars (400) is machined prior to positioning said first containment ring (105), and wherein a second circumferential edge portion corresponding to said second end cap (601B) and an edge section of said second portion of each of said plurality of rotor bars is machined prior to positioning said second containment ring (105).

17. The rotor assembly of claim 14, wherein said plurality of rotor bars (400) are comprised of copper, wherein said first end cap (601A) is comprised of copper, and wherein said second end (601B) cap is comprised of copper.

18. The rotor assembly of claim 14, wherein said first and second end caps are forged.

## Patentansprüche

1. Verfahren zur Herstellung einer Rotoranordnung für einen Elektromotor, das Verfahren umfassend:
Einsetzen einer Vielzahl von Rotorstäben (400) in eine entsprechende Vielzahl von Führungsnuten (203) innerhalb eines Stapels laminierter Scheiben, wobei ein erster Abschnitt jeder der Vielzahl von Rotorstäben (400) von einer ersten Endfläche des Stapels laminierter Scheiben vorragt, und wobei ein zweiter Abschnitt jeder der Vielzahl von Rotorstäben (400) von einer zweiten Endfläche des Stapels laminierter Scheiben vorragt;
Montieren einer ersten Endkappe (601A) auf der Vielzahl von Rotorstäben (400), wobei der erste Abschnitt jeder der Vielzahl von Rotorstäben (400) in eine entsprechende Führungsnut (701) einer ersten Vielzahl von Führungsnuten in der ersten Endkappe (601A) passt;
Montieren einer zweiten Endkappe (601B) auf der Vielzahl von Rotorstäben (400), wobei der zweite Abschnitt jeder der Vielzahl von Rotorstäben (400) in eine entsprechende Führungsnut (701) einer zweiten Vielzahl von Führungsnuten in der zweiten Endkappe (601B) passt;
Richten eines ersten Elektronenstrahls auf eine Umfangsseitenfläche der ersten Endkappe (601A) und Schweißen mindestens eines Bereichs des ersten Abschnitts jeder der Vielzahl von Rotorstäben (400) an die entsprechende Führungsnut (701) der ersten Vielzahl von Führungsnuten der ersten Endkappe (601A); und
Richten eines zweiten Elektronenstrahls auf eine Umfangsseitenfläche der zweiten Endkappe (601B) und Schweißen mindestens eines Bereichs des zweiten Abschnitts jeder der Vielzahl von Rotorstäben (400) an die entsprechende Führungsnut (701) der zweiten Vielzahl von Führungsnuten der zweiten Endkappe (601B); **dadurch gekennzeichnet, dass**
der Schritt des Richtens des ersten Elektronenstrahls ferner umfasst: Richten des ersten Elektronenstrahls auf eine erste Stelle, die zu einer ersten Verbindungsstelle versetzt ist, die durch eine äußerste Oberfläche des ersten Abschnitts jeder der Vielzahl von Rotorstäben (400) und eine axial innerste Sitzoberfläche der entsprechenden Führungsnut der ersten Vielzahl von Führungsnuten der ersten Endkappe (601A), an der die Rotorstäben (400) die erste Endkappe (601A) berühren, definiert ist, wobei die erste Stelle zu der ersten Verbindungsstelle in einer Richtung zur axial äußersten Oberfläche der ersten Endkappe (601A) versetzt ist; und
der Schritt des Richtens des zweiten Elektronenstrahls ferner umfasst: Richten des zweiten Elektronenstrahls auf eine zweite Stelle, die zu einer zweiten Verbindungsstelle versetzt ist, die durch eine axial äußerste Oberfläche des zweiten Abschnitts jeder der Vielzahl von Rotorstäben (400) und eine axial innerste Sitzoberfläche der entsprechenden Führungsnut der zweiten Vielzahl von Führungsnuten der zweiten Endkappe (601B), an der die Rotorstäben (400) die zweite Endkappe (601B) berühren, definiert ist, wobei die zweite Stelle zu der zweiten Verbindungsstelle in einer Richtung zur axial äußersten Oberfläche der zweiten Endkappe (601B) versetzt ist.

2. Verfahren nach Anspruch 1, wobei der erste Elektronenstrahl und der zweite Elektronenstrahl von einem einzelnen Elektronenstrahlschweißgerät emittiert werden, und wobei die Schritte des Richtens des ersten Elektronenstrahls und des Richtens des zweiten Elektronenstrahls aufeinanderfolgend durchgeführt werden.

3. Verfahren nach Anspruch 1, wobei der erste Elektronenstrahl von einem ersten Elektronenstrahlschweißgerät emittiert wird und der zweite Elektronenstrahl von einem zweiten Elektronenstrahlschweißgerät emittiert wird, und wobei die Schritte des Richtens des ersten Elektronenstrahls und des Richtens des zweiten Elektronenstrahls gleichzeitig durchgeführt werden.

4. Verfahren nach Anspruch 1, wobei der Schritt des Richtens des ersten Elektronenstrahls ferner den Schritt des Rotierens des ersten Elektronenstrahls um die erste Endkappe (601A) umfasst, derart, dass der erste Elektronenstrahl aufeinanderfolgend mindestens den Bereich des ersten Abschnitts jeder der Vielzahl von Rotorstäben (400) an die entsprechende Führungsnut (701) der ersten Vielzahl von Führungsnuten der ersten Endkappe (601A) schweißt, und wobei der Schritt des Richtens des zweiten Elektronenstrahls ferner den Schritt des Rotierens des zweiten Elektronenstrahls um die zweite Endkappe (601B) umfasst, derart, dass der zweite Elektronenstrahl aufeinanderfolgend mindestens den Bereich des zweiten Abschnitts jeder der Vielzahl von Rotorstäben (400) an die entsprechende Führungsnut der zweiten Vielzahl von Führungsnuten (701) der zweiten Endkappe (601B) schweißt.

5. Verfahren nach Anspruch 1, wobei nach dem Durchführen des Schritts des Montierens der ersten Endkappe (601A) und während des Richtens des ersten Elektronenstrahls das Verfahren ferner den Schritt des Rotierens der ersten Endkappe (601A) und des Stapels laminierter Scheiben im Verhältnis zum ersten Elektronenstrahl umfasst, derart, dass der erste Elektronenstrahl mindestens den Bereich des ersten Abschnitts jeder der Vielzahl von Rotorstäben (400) an die entsprechende Führungsnut (701) der ersten Vielzahl von Führungsnuten der ersten Endkappe (601A) aufeinanderfolgend schweißt, und wobei nach dem Montieren der zweiten Endkappe (601B) und während des Richtens des zweiten Elektronenstrahls das Verfahren ferner den Schritt des Rotierens der zweiten Endkappe (601B) und des Stapels laminierter Scheiben im Verhältnis zum zweiten Elektronenstrahl umfasst, derart, dass der zweite Elektronenstrahl mindestens den Bereich des zweiten Abschnitts jeder der Vielzahl von Rotorstäben (400) an die entsprechende Führungsnut (701) der zweiten Vielzahl von Führungsnuten der zweiten Endkappe aufeinanderfolgend schweißt.

6. Verfahren nach Anspruch 1, wobei der Schritt des Schweißens mindestens des Bereichs des ersten Abschnitts jeder der Vielzahl von Rotorstäben (400) an die entsprechende Führungsnut (701) der ersten Vielzahl von Führungsnuten der ersten Endkappe (601A) ferner den Schritt des Schweißens bis zu einer ersten Schweißtiefe umfasst, wobei die erste Schweißtiefe sich über einen inneren Radius hinaus erstreckt, der durch die Vielzahl von Rotorstäben (400) definiert wird, und wobei der Schritt des Schweißens mindestens des Bereichs des zweiten Abschnitts jeder der Vielzahl von Rotorstäben (400) an die entsprechende Führungsnut (701) der zweiten Vielzahl von Führungsnuten der zweiten Endkappe (601B) ferner den Schritt des Schweißens bis zu einer zweiten Schweißtiefe umfasst, wobei die zweite Schweißtiefe sich über den inneren Radius hinaus erstreckt, der durch die Vielzahl von Rotorstäben (400) definiert wird.

7. Verfahren nach Anspruch 1, ferner umfassend:
Bearbeiten der ersten Endkappe (601A), um einen ersten Umfangsrandabschnitt der ersten Endkappe und ein Randstück des Bereichs des ersten Abschnitts jeder der Vielzahl von Rotorstäben (400) zu entfernen, wobei der Schritt des Bearbeitens der ersten Endkappe nach dem Schritt des Richtens des ersten Elektronenstrahls durchgeführt wird; und
Bearbeiten der zweiten Endkappe (601B), um einen zweiten Umfangsrandabschnitt der zweiten Endkappe und ein Randstück des Bereichs des zweiten Abschnitts jeder der Vielzahl von Rotorstäben (400) zu entfernen, wobei der Schritt des Bearbeitens der zweiten Endkappe nach dem Schritt des Richtens des zweiten Elektronenstrahls durchgeführt wird.

8. Verfahren nach Anspruch 7, ferner umfassend die folgenden Schritte des:
Anbringens eines ersten Einfassungsrings (105) über die erste Endkappe (601A), wobei der erste Einfassungsring auf der ersten Endkappe an einer Stelle positioniert ist, die einem äußersten Endbereich der ersten Endkappe entspricht, an dem der erste Umfangsrandabschnitt durch das Bearbeiten der ersten Endkappe entfernt wurde; und
Anbringens eines zweiten Einfassungsrings (105) über die zweite Endkappe (601B), wobei der zweite Einfassungsring auf der zweiten Endkappe an einer Stelle positioniert ist, die einem äußersten Endbereich der zweiten Endkappe entspricht, an dem der zweite Umfangsrandabschnitt durch das Bearbeiten der zweiten Endkappe entfernt wurde.

9. Verfahren nach Anspruch 1, ferner umfassend die folgenden Schritte des:
Herstellens der Vielzahl von Rotorstäben (400) aus einem Kupfermaterial;
Herstellens der ersten Endkappe (601A) aus dem Kupfermaterial; und
Herstellens der zweiten Endkappe (601B) aus dem Kupfermaterial.

10. Verfahren nach Anspruch 1, ferner umfassend die Schritte des Formens der ersten Endkappe (601A) aus Kupfer und des Formens der zweiten Endkappe (601B) aus Kupfer.

11. Verfahren nach Anspruch 1, ferner umfassend die Schritte des Pressens der ersten Endkappe (601A) auf den ersten Abschnitt der Vielzahl von Rotorstäben (400) und zu dem Stapel laminierter Scheiben hin und des Pressens der zweiten Endkappe (601B) auf den zweiten Abschnitt der Vielzahl von Rotorstäben (400) und zu dem Stapel laminierter Scheiben hin.

12. Verfahren nach Anspruch 11, wobei der Schritt des Pressens der ersten Endkappe (601A) auf den ersten Abschnitt der Vielzahl von Rotorstäben (400) ferner den Schritt des Setzens einer Innenoberfläche der ersten Endkappe (601A) auf eine erste Außenscheibe des Stapels laminierter Scheiben umfasst, und wobei der Schritt des Pressens der zweiten Endkappe (601B) auf den zweiten Abschnitt der Vielzahl von Rotorstäben (400) ferner den Schritt des Setzens einer Innenoberfläche der zweiten Endkappe auf eine zweite Außenscheibe des Stapels laminierter Scheiben umfasst.

13. Verfahren nach Anspruch 1, wobei die erste Vielzahl von Führungsnuten durch eine Innenoberoberfläche der ersten Endkappe (601A) verläuft und sich nur teilweise durch die erste Endkappe (601A) zu einer Außenoberfläche der ersten Endkappe (601A) erstreckt, und wobei die zweite Vielzahl von Führungsnuten durch eine Innenoberfläche der zweiten Endkappe (601B) verläuft und sich nur teilweise durch die zweite Endkappe zu einer Außenoberfläche der zweiten Endkappe erstreckt.

14. Rotoranordnung für einen Elektromotor, umfassend:
eine Rotorwelle;
eine Vielzahl von laminierten Scheiben, die in einen Stapel laminierter Scheiben ausgebildet sind, wobei jede der Vielzahl von laminierten Scheiben eine Vielzahl von Führungsnuten umfasst, wobei die Vielzahl von Führungsnuten jeder der Vielzahl von laminierten Scheiben in dem Stapel laminierter Scheiben zueinander ausgerichtet sind, und wobei der Stapel laminierter Scheiben an die Rotorwelle montiert ist;
eine Vielzahl von Rotorstäben (400), die durch die Vielzahl von Führungsnuten des Stapels laminierter Scheiben verlaufen, wobei ein erster Abschnitt jeder der Vielzahl von Rotorstäben sich von einer ersten Endfläche des Stapels laminierter Scheiben heraus und weg erstreckt, und wobei ein zweiter Abschnitt jeder der Vielzahl von Rotorstäben sich von einer zweiten Endfläche des Stapels laminierter Scheiben heraus und weg erstreckt;
eine erste Endkappe (601A), die an die Vielzahl von Rotorstäben geschweißt ist, wobei die erste Endkappe (601A) eine erste Vielzahl von Führungsnuten umfasst, wobei der erste Abschnitt jeder der Vielzahl von Rotorstäben in eine entsprechende Führungsnut (701) der ersten Vielzahl von Führungsnuten passt, wobei ein erster Endbereich, der dem ersten Abschnitt jeder der Vielzahl von Rotorstäben entspricht, durch einen Elektronenstrahl an die entsprechende Führungsnut der ersten Vielzahl von Führungsnuten der ersten Endkappe (601A) schmelzgeschweißt ist, und wobei der erste Endbereich sich von einem äußeren Rotorstabradius, der durch die Vielzahl von Rotorstäben definiert wird, zu einem inneren Rotorstabradius, der durch die Vielzahl von Rotorstäben definiert wird, erstreckt; und
eine zweite Endkappe (601B), die an die Vielzahl von Rotorstäben geschweißt ist, wobei die zweite Endkappe eine zweite Vielzahl von Führungsnuten umfasst, wobei der zweie Abschnitt jeder der Vielzahl von Rotorstäben in eine entsprechende Führungsnut der zweiten Vielzahl von Führungsnuten passt, wobei ein zweiter Endbereich, der dem zweiten Abschnitt jeder der Vielzahl von Rotorstäben entspricht, durch den Elektronenstrahl an die entsprechende Führungsnut der zweiten Vielzahl von Führungsnuten der zweiten Endkappe schmelzgeschweißt ist, und wobei der zweite Endbereich sich von dem äußeren Rotorstäbenradius, der durch die Vielzahl von Rotorstäben definiert wird, zu dem inneren Rotorstabradius, der durch die Vielzahl von Rotorstäben definiert wird, erstreckt;
**dadurch gekennzeichnet, dass**
der Elektronenstrahl auf eine erste Stelle gerichtet ist, die zu einer ersten Verbindungsstelle, die durch eine axial äußerste Oberfläche des ersten Abschnitts jeder der Vielzahl von Rotorstäben und eine axial innerste Sitzoberfläche der entsprechenden Führungsnut der ersten Vielzahl von Führungsnuten der ersten Endkappe (601A) definiert wird und an die Rotorstäbe (400) die erste Endkappe (601A) berühren, versetzt ist, wobei die erste Stelle von der ersten Verbindungsstelle in einer Richtung zur axial äußersten Oberfläche der ersten Endkappe (601A) versetzt ist; und
der Elektronenstrahl ferner auf eine zweite Stelle gerichtet ist, die zu einer zweiten Verbindungsstelle, die durch eine axial äußerste Oberfläche des zweiten Abschnitts jeder der Vielzahl von Rotorstäben und eine axial innerste Sitzoberfläche der entsprechenden Führungsnut der zweiten Vielzahl von Führungsnuten der zweiten Endkappe definiert wird, und an der die Rotorstäben (400) die zweite Endkappe (601B) berühren, versetzt ist, wobei die zweite Stelle von der zweiten Verbindungsstelle in einer Richtung zur axial äußersten Oberfläche der zweiten Endkappe versetzt ist.

15. Rotoranordnung nach Anspruch 14, ferner umfassend:
einen ersten Einfassungsring (105), der um einen Abschnitt der ersten Endkappe (601A) und den ersten Abschnitt jeder der Vielzahl von Rotorstäben (400) positioniert ist; und
einen zweiten Einfassungsring (105), der um einen Abschnitt der zweiten Endkappe (601B) und den zweiten Abschnitt jeder der Vielzahl von Rotorstäben positioniert ist.

16. Rotoranordnung nach Anspruch 15, wobei ein erster Umfangsrandabschnitt, der der ersten Endkappe (601A) und einem Randstück des ersten Abschnitts jeder der Vielzahl von Rotorstäben (400) entspricht, vor dem Positionieren des ersten Einfassungsrings (105) bearbeitet wird, und wobei ein zweiter Umfangsrandabschnitt, der der zweiten Endkappe (601B) und einem Randstück des zweiten Abschnitts jeder der Vielzahl von Rotorstäben entspricht, vor dem Positionieren des zweiten Einfassungsrings (105) bearbeitet wird.

17. Rotoranordnung nach Anspruch 14, wobei die Vielzahl von Rotorstäben (400) aus Kupfer bestehen, wobei die erste Endkappe (601A) aus Kupfer besteht und wobei die zweite Endkappe (601B) aus Kupfer besteht.

18. Rotoranordnung nach Anspruch 14, wobei die erste und die zweite Endkappe geschweißt sind.

## Revendications

1. Procédé pour fabriquer un ensemble de rotor pour un moteur électrique, le procédé comprenant les étapes consistant à :
insérer une pluralité de barres de rotor (400) dans une pluralité correspondante de fentes (203) dans une pile de disques stratifiés, dans lequel une première partie de chacune de ladite pluralité de barres de rotor (400) fait saillie d'une première surface d'extrémité de ladite pile de disques stratifiés, et dans lequel une seconde partie de chacune de ladite pluralité de barres de rotor (400) fait saillie d'une seconde surface d'extrémité de ladite pile de disques stratifiés ;
monter une premier capuchon d'extrémité (601A) sur ladite pluralité de barres de rotor (400), dans lequel ladite première partie de chacune de ladite pluralité de barres de rotor (400) s'ajuste à l'intérieur d'une fente (701) correspondante d'une première pluralité de fentes dans ledit premier capuchon d'extrémité (601A) ;
monter un second capuchon d'extrémité (601B) sur ladite pluralité de barres de rotor (400), dans lequel ladite seconde partie de chacune de ladite pluralité de barres de rotor (400) s'ajuste à l'intérieur d'une fente (701) correspondante d'une seconde pluralité de fentes dans ledit second capuchon d'extrémité (601B) ;
diriger un premier faisceau d'électrons vers une surface latérale circonférentielle dudit premier capuchon d'extrémité (601A) et faire fondre au moins une région de ladite première partie de chacune de ladite pluralité de barres de rotor (400) sur ladite fente (701) correspondante de ladite première pluralité de fentes dudit premier capuchon d'extrémité (601A) ; et
diriger un second faisceau d'électrons vers une surface latérale circonférentielle dudit second capuchon d'extrémité (601B) et faire fondre au moins une région de ladite seconde partie de chacune de ladite pluralité de barres de rotor (400) sur ladite fente (701) correspondante de ladite seconde pluralité de fentes dudit second capuchon d'extrémité (601B) ; **caractérisé en ce que** :
ladite étape consistant à diriger ledit premier faisceau d'électrons comprend en outre l'étape consistant à : diriger ledit premier faisceau d'électrons à un premier emplacement décalé d'une première jonction définie par la surface située le plus à l'extérieur de ladite première partie de chacune de ladite pluralité de barres de rotor (400) et la surface de siège axialement le plus à l'intérieur de ladite fente correspondante de ladite première pluralité de fentes dudit premier capuchon d'extrémité (601A), dans lequel les barres de rotor (400) sont en contact avec le premier capuchon d'extrémité (601A), dans lequel ledit premier emplacement est décalé de ladite première jonction dans une direction allant vers la surface située axialement le plus à l'extérieur dudit premier capuchon d'extrémité (601A) ; et
ladite étape consistant à diriger ledit second faisceau d'électrons comprend l'étape consistant à : diriger ledit second faisceau d'électrons à un second emplacement décalé d'une seconde jonction définie par la surface située axialement le plus à l'extérieur de ladite seconde partie de chacune de ladite pluralité de barres de rotor (400) et la surface de siège située axialement le plus à l'intérieur de ladite fente correspondante de ladite seconde pluralité de fentes dudit second capuchon d'extrémité (601B), dans lequel les barres de rotor (400) sont en contact avec le second capuchon d'extrémité (601B), dans lequel ledit second emplacement est décalé de ladite seconde jonction dans une direction allant vers la surface située axialement le plus à l'extérieur dudit second capuchon d'extrémité (601B).

2. Procédé selon la revendication 1, dans lequel ledit premier faisceau d'électrons et ledit second faisceau d'électrons sont émis par une seule machine de soudage par bombardement électronique, et dans lequel lesdites étapes consistant à diriger ledit premier faisceau d'électrons et diriger ledit second faisceau d'électrons sont réalisées en séquence.

3. Procédé selon la revendication 1, dans lequel ledit premier faisceau d'électrons est émis par une machine de soudage par bombardement électronique et ledit second faisceau d'électrons est émis par une seconde machine de soudage par bombardement électronique, et dans lequel lesdites étapes consistant à diriger ledit premier faisceau d'électrons et diriger ledit second faisceau d'électrons sont réalisées simultanément.

4. Procédé selon la revendication 1, dans lequel ladite étape consistant à diriger ledit premier faisceau d'électrons comprend en outre l'étape consistant à faire tourner ledit premier faisceau d'électrons autour dudit premier capuchon d'extrémité (601A) de sorte que ledit premier faisceau d'électrons fait fondre en séquence au moins ladite région de ladite première partie de chacune de ladite pluralité de barres de rotor (400) sur ladite fente (701) correspondante de ladite première pluralité de fentes dudit premier capuchon d'extrémité (601A), et dans lequel ladite étape consistant à diriger ledit second faisceau d'électrons comprend en outre l'étape consistant à faire tourner ledit second faisceau d'électrons autour dudit second capuchon d'extrémité (601B) de sorte que ledit second faisceau d'électrons fait fondre en séquence au moins ladite région de ladite seconde partie de chacune de ladite pluralité de barres de rotor (400) sur ladite fente correspondante de ladite seconde pluralité de fentes (701) dudit second capuchon d'extrémité (601B).

5. Procédé selon la revendication 1, dans lequel après avoir réalisé ladite étape consistant à monter ledit premier capuchon d'extrémité (601A) et tout en réalisant ladite étape consistant à diriger ledit premier faisceau d'électrons, ledit procédé comprend en outre l'étape consistant à faire tourner ledit premier capuchon d'extrémité (601A) et ladite pile de disques stratifiés par rapport audit premier faisceau d'électrons de sorte que ledit premier faisceau d'électrons fait fondre en séquence au moins ladite région de ladite première partie de chacune de ladite pluralité de barres de rotor (400) sur ladite fente (701) correspondante de ladite première pluralité de fentes dudit premier capuchon d'extrémité (601A), et dans lequel après avoir réalisé ladite étape consistant à monter ledit second capuchon d'extrémité (601B) et tout en réalisant ladite étape consistant à diriger ledit second faisceau d'électrons, ledit procédé comprend en outre l'étape consistant à faire tourner ledit second capuchon d'extrémité (601B) et ladite pile de disques stratifiés par rapport audit second faisceau d'électrons de sorte que ledit second faisceau d'électrons fait fondre en séquence au moins ladite région de ladite seconde partie de chacune de ladite pluralité de barres de rotor (400) sur ladite fente (701) correspondante de ladite seconde pluralité de fentes dudit second capuchon d'extrémité.

6. Procédé selon la revendication 1, dans lequel ladite étape consistant à faire fondre ladite région de ladite première partie de chacune de ladite pluralité de barres de rotor (400) sur ladite fente (701) correspondante de ladite première pluralité de fentes dudit premier capuchon d'extrémité (601A) comprend en outre l'étape consistant à fondre à une première profondeur de soudure, dans lequel ladite première profondeur de soudure s'étend au-delà d'un rayon interne défini par ladite pluralité de barres de rotor (400), et dans lequel ladite étape consistant à faire fondre au moins ladite région de ladite seconde partie de chacune de ladite pluralité de barres de rotor (400) sur ladite fente (701) correspondante de ladite seconde pluralité de fentes dudit second capuchon d'extrémité (601B) comprend en outre l'étape consistant à fondre à une seconde profondeur de soudure, dans lequel ladite seconde profondeur de soudure s'étend au-delà dudit rayon interne défini par ladite pluralité de barres de rotor (400).

7. Procédé selon la revendication 1, comprenant en outre les étapes consistant à :
usiner ledit premier capuchon d'extrémité (601A) pour retirer une première partie de bord circonférentielle dudit premier capuchon d'extrémité et une section de bord de ladite région de ladite première partie de chacune de ladite pluralité de barres de rotor (400), dans lequel ladite étape consistant à usiner ledit premier capuchon d'extrémité est réalisée après ladite étape consistant à diriger ledit premier faisceau d'électrons ; et
usiner ledit second capuchon d'extrémité (601B) pour retirer une seconde partie de bord circonférentielle dudit second capuchon d'extrémité et une section de bord de ladite première région de ladite seconde partie de chacune de ladite pluralité de barres de rotor (400), dans lequel ladite étape consistant à usiner ledit second capuchon d'extrémité est réalisée après ladite étape consistant à diriger ledit second faisceau d'électrons.

8. Procédé selon la revendication 7, comprenant en outre les étapes consistant à :
ajuster une première bague de confinement (105) sur ledit premier capuchon d'extrémité (601A), dans lequel ladite première bague de confinement est positionnée sur ledit premier capuchon d'extrémité à un emplacement correspondant à la région d'extrémité située le plus à l'extérieur dudit premier capuchon d'extrémité où ladite première partie de bord circonférentielle a été retirée via ladite étape consistant à usiner ledit premier capuchon d'extrémité ; et
ajuster une seconde bague de confinement (105) sur ledit second capuchon d'extrémité (601B), dans lequel ladite seconde bague de confinement est positionnée sur ledit second capuchon d'extrémité à un emplacement correspondant à la région d'extrémité située le plus à l'extérieur dudit second capuchon d'extrémité où ladite seconde partie de bord circonférentielle a été retirée via ladite étape consistant à usiner ledit second capuchon d'extrémité.

9. Procédé selon la revendication 1, comprenant en outre les étapes consistant à :
fabriquer ladite pluralité de barres de rotor (400) à partir d'un matériau en cuivre ;
fabriquer ledit premier capuchon d'extrémité (601A) à partir dudit matériau en cuivre ; et
fabriquer ledit second capuchon d'extrémité (601B) à partir dudit matériau en cuivre.

10. Procédé selon la revendication 1, comprenant en outre les étapes consistant à forger ledit premier capuchon d'extrémité (601A) à partir de cuivre et à forger ledit second capuchon d'extrémité (601B) à partir de cuivre.

11. Procédé selon la revendication 1, comprenant en outre les étapes consistant à comprimer ledit premier capuchon d'extrémité (601A) sur ladite première partie de ladite pluralité de barres de rotor (400) et vers ladite pile de disques stratifiés et comprimer ledit second capuchon d'extrémité (601B) sur ladite seconde partie de ladite pluralité de barres de rotor (400) et vers ladite pile de disques stratifiés.

12. Procédé selon la revendication 11, dans lequel ladite étape consistant à comprimer ledit premier capuchon d'extrémité (601A) sur ladite première partie de ladite pluralité de barres de rotor (400) comprend en outre l'étape consistant à installer une surface interne dudit premier capuchon d'extrémité (601A) sur un premier disque externe de ladite pile de disques stratifiés, et dans lequel ladite étape consistant à comprimer ledit second capuchon d'extrémité (601B) sur ladite seconde partie de ladite pluralité de barres de rotor (400) comprend en outre l'étape consistant à installer une surface interne dudit second capuchon d'extrémité sur un second disque externe de ladite pile de disques stratifiés.

13. Procédé selon la revendication 1, dans lequel ladite première pluralité de fentes passe par une surface interne dudit premier capuchon d'extrémité (601A) et s'étend uniquement partiellement à travers ledit premier capuchon d'extrémité (601A) vers une surface externe dudit premier capuchon d'extrémité (601A) et dans lequel ladite seconde pluralité de fentes passe par une surface interne dudit second capuchon d'extrémité (601B) et s'étend uniquement partiellement à travers ledit second capuchon d'extrémité vers une surface externe dudit second capuchon d'extrémité.

14. Ensemble de rotor pour un moteur électrique, comprenant :
un arbre de rotor ;
une pluralité de disques stratifiés formés dans une pile de disques stratifiés, dans lequel chacun de ladite pluralité de disques stratifiés comprend une pluralité de fentes, dans lequel ladite pluralité de fentes de chacun de ladite pluralité de disques stratifiés sont co-alignées à l'intérieur de ladite pile de disques stratifiés, et dans lequel ladite pile de disques stratifiés est montée sur ledit arbre de rotor ;
une pluralité de barres de rotor (400) passant par ladite pluralité de fentes de ladite pile de disques stratifiés, dans lequel une première partie de chacune de ladite pluralité de barres de rotor s'étend vers l'extérieur et à distance d'une première surface d'extrémité de ladite pile de disques stratifiés, et dans lequel une seconde partie de chacune de ladite pluralité de barres de rotor s'étend à l'extérieur et à distance d'une seconde surface d'extrémité de ladite pile de disques stratifiés ;
un premier capuchon d'extrémité (601A) fondu sur ladite pluralité de barres de rotor, dans lequel ledit premier capuchon d'extrémité (601A) comprend une première pluralité de fentes, dans lequel ladite première partie de chacune de ladite pluralité de barres de rotor s'ajuste à l'intérieur d'une fente (701) correspondante de ladite première pluralité de fentes, dans lequel une première région d'extrémité correspondant à ladite première partie de chacune de ladite pluralité de barres de rotor est soudée par fusion via un faisceau d'électrons sur ladite fente correspondante de ladite première pluralité de fentes dudit premier capuchon d'extrémité (601A), et dans lequel ladite première région d'extrémité s'étend à partir d'un rayon de barre de rotor externe défini par ladite pluralité de barres de rotor jusqu'à un rayon de barre de rotor interne défini par ladite pluralité de barres de rotor ; et
un second capuchon d'extrémité (601B) fondu sur ladite pluralité de barres de rotor, dans lequel ledit second capuchon d'extrémité comprend une seconde pluralité de fentes, dans lequel ladite seconde partie de chacune de ladite pluralité de barres de rotor s'ajuste à l'intérieur d'une fente correspondante de ladite seconde pluralité de fentes, dans lequel une seconde région d'extrémité correspondant à ladite seconde partie de chacune de ladite pluralité de barres de rotor est soudée par fusion via ledit faisceau d'électrons sur ladite fente correspondante de ladite seconde pluralité de fentes dudit second capuchon d'extrémité, et dans lequel ladite seconde région d'extrémité s'étend à partir dudit rayon de barre de rotor externe défini par ladite pluralité de barres de rotor jusqu'audit rayon de barre de rotor interne défini par ladite pluralité de barres de rotor ;
**caractérisé en ce que** :
ledit faisceau d'électrons est dirigé à : un premier emplacement décalé d'une première jonction définie par une surface située axialement le plus à l'extérieur de ladite première partie de chacune de ladite pluralité de barres de rotor et une surface de siège située axialement le plus à l'intérieur de ladite fente correspondante de ladite première pluralité de fentes dudit premier capuchon d'extrémité (601A), dans lequel les barres de rotor (400) sont en contact avec le premier capuchon d'extrémité (601A), dans lequel ledit premier emplacement est décalé de ladite première jonction dans une direction allant vers la surface située axialement vers l'extérieur dudit premier capuchon d'extrémité (601A) ; et
ledit faisceau d'électrons est en outre dirigé à : un second emplacement décalé d'une seconde jonction définie par une surface située axialement le plus à l'extérieur de ladite seconde partie de chacune de ladite pluralité de barres de rotor, et une surface de siège située axialement le plus à l'intérieur de ladite fente correspondante de ladite seconde pluralité de fentes dudit second capuchon d'extrémité, dans lequel les barres de rotor (400) sont en contact avec le second capuchon d'extrémité (601B), dans lequel ledit second emplacement est décalé de ladite seconde jonction dans une direction vers la surface située axialement le plus à l'extérieur dudit second capuchon d'extrémité.

15. Ensemble de rotor selon la revendication 14, comprenant en outre :
une première bague de confinement (105) positionnée autour d'une section dudit premier capuchon d'extrémité (601A) et ladite première partie de chacune de ladite pluralité de barres de rotor (400) ; et
une seconde bague de confinement (105) positionnée autour d'une section dudit second capuchon d'extrémité (601B) et ladite seconde partie de chacune de ladite pluralité de barres de rotor.

16. Ensemble de rotor selon la revendication 15, dans lequel une première partie de bord circonférentielle correspondant audit premier capuchon d'extrémité (601A) et à une section de bord de ladite première partie de chacune de ladite pluralité de barres de rotor (400) est usinée avant de positionner ladite première bague de confinement (105), et dans lequel une seconde partie de bord circonférentielle correspondant audit second capuchon d'extrémité (601B) et à une section de bord de ladite seconde partie de chacune de ladite pluralité de barres de rotor est usinée avant de positionner ladite seconde bague de confinement (105).

17. Ensemble de rotor selon la revendication 14, dans lequel ladite pluralité de barres de rotor (400) sont composées de cuivre, dans lequel ledit premier capuchon d'extrémité (601A) est composé de cuivre et dans lequel ledit second capuchon d'extrémité (601B) est composé de cuivre.

18. Ensemble de rotor selon la revendication 14, dans lequel lesdits premier et second capuchons d'extrémité sont forgés.
